# EUROPÄISCHE PATENTSCHRIFT

(11) **EP 0 891 709 B1**
(45) Veröffentlichungstag und Bekanntmachung des Hinweises auf die Patenterteilung: **12.03.2003**
(21) Anmeldenummer: 98117230.7
(22) Anmeldetag: 11.05.1993
(51) Int. Cl.: A01N 43/50

(54) **Synergistisch wirksame Herbizidkombinationen**
Synergistic herbicide combination
Combinaison d'herbicides synergique

(30) Priorität: 15.05.1992 DE 4216130
(43) Veröffentlichungstag der Anmeldung: 20.01.1999
(62) Teilanmeldung aus: 93107665.7
(73) Patentinhaber: Bayer CropScience GmbH, 65929 Frankfurt/Main (DE)
(72) Erfinder: Willms, Lothar Dr., 65719 Hofheim (DE); Bauer, Klaus Dr., 63456 Hanau (DE); Bieringer, Hermann Dr., 65817 Eppstein (DE); Hacker, Erwin Dr., 65239 Hochheim (DE)

(56) Entgegenhaltungen:
- EP-A- 0 190 666
- EP-A- 0 485 207
- EP-A- 0 487 454
- EP-A- 0 496 608
- EP-A- 0 524 394
- EP-A- 0 525 474
- US-A- 5 030 271

## Beschreibung

Die Imidazolinone sind eine neuere Substanzklasse herbizider Wirkstoffe, die in verschiedenen Nutzpflanzenkulturen zur selektiven Unkrautbekämpfung eingesetzt werden. Dazu gehören Herbizide wie Imazaquin, Imazethapyr und Imazethametapyr (AC 263222), die vor allem in Sojabohnen eingesetzt werden.

Neuerdings können diese Herbizide aber auch in Mais eingesetzt werden. Einerseits, weil resistente Maisarten entwickelt wurden und andererseits, weil neue Safener-Wirkstoffe gefunden wurden, die den selektiven Einsatz in Maiskulturen ermöglichen (P 4041120.6 = EP-A-1008297, EP-A-492367 und P 4041121.4 = EP-A-492366).

Aus verschiedenen Schriften sind bereits einige Mischungen von Imidazolinon-Herbiziden mit einigen anderen Herbiziden bekannt. So beschreibt FR 2 584 265 Mischungen enthaltend ein Herbizid aus der Gruppe der 2-lmidazolinyl-3-chinolinund 2-lmidazolinyl-3-nikotincarbonsäurederivate und ein Herbizid aus der Gruppe der Nitrophenoxybenzoesäuren. EP-A 0 181 628 offenbart unteren anderem die Mischung enthaltend Imazaquin und 2-(4-Chlor-2-Fluor-5-n-pentyloxycarbonylmethoxyphenyl)-4,5,6,7-tetrahydro-2H-isoindole-1,3-dion. US 5,030,271 nennt synergistische Mischungen enthaltend ein Herbizid aus der Gruppe der 2-lmidazolinyl-3-chinolin- und 2-Imidazolinyl-3-nikotincarbonsäurederivate und ein Herbizid aus der Gruppe der Sulfonylharnstoffe. Aus EP-A 0 487 454 ist bekannt, daß die Mischungen von 5-(1-Methylthiocyclo-propan-1-yl)-2-[1-(trans-3-chlorallyloximino)-propionyl]-cyclohexan-1,3-dion mit verschiedenen Herbiziden, unter anderen Imazethapyr, synergistische Wirkung aufweisen.

Bei biologischen Versuchen zu den Einsatzmöglichkeiten im Mais wurde überraschenderweise gefunden, daß einige Mischungen von Imidazolinonen mit anderen selektiven Maisherbiziden ungewöhnliche synergistische Eigenschaften zeigen, die mit großen wirtschaftlichen Vorteilen verbunden sind.

Durch Nutzung solcher synergistischer Effekte können die Aufwandmengen der beteiligten Mischungspartner erheblich reduziert werden, und es gelingt, ein breites Spektrum mono- und dicotyler Unkräuter in einem Arbeitsgang zu bekämpfen. Die Reduktion der Aufwandmengen betrifft insbesondere die Imidazolinone, aber auch die Kombinationspartner bezüglich ihrer spezifischen Wirksamkeit.

Der Einsatz von Mischungen, die synergistische Effekte verursachen, ist mit großen wirtschaftlichen, aber auch ökologischen Vorteilen verbunden. Unter Synergismus versteht man die sich gegenseitig verstärkende Wirkung von zwei oder mehr Stoffen. Im vorliegenden Fall bewirkt die kombinierte Anwendung der Herbizide, daß die Aufwandmengen der Herbizide reduziert werden können und trotzdem die gleiche herbizide Wirkung erreicht wird, bzw. daß mit den gleichen Aufwandmengen der Herbizide eine höhere als die zu erwartende Wirkung der einzeln eingesetzten Wirkstoffe erzielt wird (synergistischer Effekt).

Als Mischungspartner zur zusätzlichen Verbreiterung des Wirkungsspektrums vor allem bei dikotylen Unkräutern zeigten Herbizide vom Typ der Cyclohexandione synergistische Wirksamkeit.

Gegenstand der vorliegenden Erfindung sind also herbizide Mittel, enthaltend in einer synergistisch wirksamen Menge mindestens eine Verbindung aus der Gruppe Imazaquin, Imazethapyr und Imazethamethapyr (AC 263233) in Kombination mit mindestens einem Herbizid aus der Gruppe der Cyclohexandione, wobei die Kombination von 5-(1-Methylthiocyclopropan-1-yl)-2-[1-(trans-3-chlorallyloximino)-propionyl]-cyclohexan-1,3-dion und Imazethapyr ausgenommen sein soll.

Die Erfindung betrifft insbesondere folgende Herbizide als Mischungspartner: - Cyclohexandione, wie z. B. ICI-051 (2-[2-Chlor-4-(methylsulfonyl)benzoyl]-1,3-cyclohexandion). (Chlormesulone, Sulcotrione),

Das vorstehend genannte Herbizid wird in Pesticide Manual, (Brit. Crop. Prot. Council, 9.Ausgabe (1991), und in Weed Techn. (1991, Band 5) beschrieben.

Die Aufwandmengen der Herbizide liegen im allgemeinen zwischen 0,01 und 2 kg/ha, d. h. die Gesamtmenge an aufzuwendender Wirkstoffkombination beträgt etwa 0,02 bis 2 kg/ha. Die erforderliche Aufwandmenge kann in Abhängigkeit von den äußeren Bedingungen wie Temperatur, Feuchtigkeit u. a. schwanken, vorzugsweise liegt sie zwischen 0,05 und 1 kg/ha. Die Mischungsverhältnisse können in Abhängigkeit von den äußeren Bedingungen innerhalb weiter Grenzen schwanken. Vorzugsweise wird ein Mengenverhältnis zwischen 1 : 20 und 20 : 1 gewählt.

Diese synergistische Effekte werden sowohl bei Mischungen mit Imazethapyr als auch bei Anwendung mit anderen Imidazolinonen erzielt. Eine Kombination der Wirkstoffe bedeutet, daß die herbiziden Wirkstoffe gemeinsam ausgebracht oder als sog. split-Applikation einige Tage nacheinander ausgebracht werden. In jedem Falle reagieren die Unkräuter mit erhöhter Sensibilität, so daß mit dem Einsatz geringerer Aufwandmengen eine sehr gute Bekämpfung erzielt werden kann.

In den folgenden Beispielen wird die Erfindung näher erläutert, ohne daß diese darauf beschränkt ist. Prozentangaben beziehen sich auf das Gewicht, sofern keine anderen Angaben gemacht sind.

Die erwähnten Herbizide können sowohl als Tankmischungen eingesetzt werden, wobei jeder Wirkstoff einzeln formuliert ist und erst zum Zeitpunkt der Anwendung mit anderen formulierten Herbiziden im Spritztank des Sprühgerätes gemischt wird, oder sie können schon gemeinsam formuliert werden und zwar auf verschiedene Art, je nachdem welche biologischen und/oder chemischphysikalischen Parameter vorgegeben sind. Als Formulierungsmöglichkeiten kommen beispielsweise in Frage: Spritzpulver (WP), emulgierbare Konzentrate (EC), wasserlösliche Pulver (SP), wasserlösliche Konzentrate (SL), konzentrierte Emulsionen (EW) wie Öl-in-Wasser und Wasser-in-Öl-Emulsionen, versprühbare Lösungen oder Emulsionen, Kapselsuspensionen (CS), Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugs- und Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie" Band 7, C. Hauser Verlag München, 4. Auflage 1986; Wade van Valkenburg, "Pesticide Formulations", Marcel Dekker N. Y., 1973; K. Martens, "Spray Drying Handbook", 3rd Edition 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Edition, Darland Books, Caldwell N. J.; H. v. Olphen "Instruction to Clay Colloid Chemistry", 2nd Edition, J. Wiley & Sons, N. Y., Marsden "Solvents Guide", 2nd Edition, Interscience, N. Y. 1963; McCutcheon's "Detergents and Emulsifiers Annual", MC Publ. Corp., Ridgewood N. J.; Sisley and Wood, "Encyclopedia of Surface Active Agents", Chem. Publ. Co. Inc., N. Y. 1964; Schönfeldt, "Grenzflächenaktive Äthylenoxidaddukte", Wiss. Verlagsgesell., Stuttgart 1976; Winnacker-Küchler "Chemische Technologie", Band 7, C. Hauser Verlag München, 4. Auflage 1986.

Auf der Basis dieser Formulierungen lassen sich auch Kombinationen mit anderen pestizid wirksamen Stoffen, Düngemitteln und/oder Wachstumsregulatoren, herstellen, z. B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Netzmittel, z. B. polyoxethylierte Alkylphenole, polyoxethylierte Fettalkohole und Fettamine, Fettalkoholpolyglykolethersulfate, Alkansulfonate oder Alkylarylsulfonate und Dispergiermittel, z. B. ligninsulfonsaures Natrium, 2,2-Dinaphthylmethan-6,6'disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes in einem organischen Lösungsmittel, z. B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calzium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid Kondensationsprodukte (z. B. Blockpolymere), Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z. B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z. B. Polyvinylalkohol, polyacrylsaures Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen enthalten in der Regel 0,1 bis 99 Gew.-%, insbesondere 0,1 bis 95 Gew.-% des Wirkstoffgemischs und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-% eines Tensides.

In Spritzpulvern beträgt die Wirkstoffkonzentration z. B. etwa 10 bis 90 Gew.-%, der Rest besteht aus üblichen Formulierungsbestandteilen. Bei emulgierbaren Konzentraten beträgt die Wirkstoffkonzentration etwa 1 bis 80 Gew.-% Wirkstoffe. Staubförmige Formulierungen enthalten etwa 1 bis 20 Gew.-% an Wirkstoffen, versprühbare Lösungen etwa 0,2 bis 20 Gew.-% Wirkstoffe. Bei Granulaten, wie wasserdispergierbaren Granulaten, hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%. Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z. B. bei Spritzpulvern, emulgierbaren Konzentraten, Dispersionen und wasserdispergierbaren Granulaten mittels Wasser. Staubförmige Zubereitungen, Granulate sowie versprühbare Lösungen werden vor der Anwendung üblicherweise nicht mehr mit weiteren inerten Stoffen verdünnt. Besonders gute Wirksamkeiten der erfindungsgemäßen Mittel können erzielt werden, wenn zusätzlich zu den in den Formulierungen enthaltenen Tensiden weitere Netzmittel in Konzentrationen von 0,1 bis 0,5 Gew.-% im Tank-mix-Verfahren zugesetzt werden, z. B. nichtionische Netzmittel oder Netzmittel vom Typ der Fettalkoholpolyolethersulfate (siehe z. B. Deutsche Patentanmeldung P 4029304.1 = EP-A-476555 und EP-A-850565). Folgende Beispiele dienen zur Erläuterung der Erfindung:

### Formulierungsbeispiele:

a) Ein Stäubemittel wird erhalten, indem man 10 Gew.-Teile einer Verbindung vom Typ des Imidazolinons und einem oder mehrere Mischungspartner, wie auf den Seiten 2 - 3 erwähnt, und 90 Gew.-Teile Talkum als Inertstoff mischt und in einer Schlagmühle zerkleinert.
b) Ein in Wasser leicht dispergierbares, benetzbares Pulver wird erhalten, indem man 25 Gew.-Teile einer Verbindung vom Typ des Imidazolinons und einen oder mehrere Kombinationspartner, wie auf den Seiten 2 - 3 erwähnt, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gew.-Teile einer Verbindung vom Typ des Imidazolinons und einen oder mehrere Kombinationspartner, wie auf den Seiten 2 - 3 erwähnt, 6 Gew.-Teile Alkylphenolpolyglykolether (Triton® X 207), 3 Gew.-Teile Isotridecanolpolyglykolether (8 EO) und 71 Gew.-Teile paraffinischem Mineralöl (Siedebereich z. B. ca. 255 bis über 277 °C) mischt und in einer Reibkugelmühle auf eine Feinheit von unter 5 Mikron vermahlt.
d) Ein emulgierbares Konzentrat wird erhalten aus 15 Gew.-Teilen einer Verbindung vom Typ des Imidazolinons und einem oder mehreren Kombinationspartnern, wie auf den Seiten 2 - 3 erwähnt, 75 Gew.-Teilen Cyclohexanon als Lösemittel und 10 Gew.-Teilen oxethyliertes Nonylphenol als Emulgator.
e) Ein in Wasser dispergierbares Granulat wird erhalten, indem man 75 Gew.-Teile einer Verbindung vom Typs des Imidazolinons und eines oder mehrerer Kombinationspartner, wie auf den Seiten 2 - 3 erwähnt,

| | |
|---|---|
| 10 " | ligninsulfonsäures Calcium, |
| 5 " | Natriumlaurylsulfat, |
| 3 " | Polyvinylalkohol und |
| 7 " | Kaolin |

mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man 25 Gew.-Teile einer Verbindung vom Typ Imidazolinon und eines oder mehrerer Kombinationspartner, wie auf den Seiten 2 - 3 erwähnt,

| | |
|---|---|
| 5 " | 2,2'-dinaphthylmethan-6,6'-disulfonsaures Natrium, |
| 2 " | oleoylmethyltaurinsaures Natrium, |
| 1 " | Polyvinylalkohol, |
| 17 " | Calciumcarbonat und |
| 50 " | Wasser |

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

### Biologische Beispiele

Biologische Versuche mit verschiedenen Kombinationen von Imazethapyr bzw. anderen Imidazolinonen und Cyclohexandione wurden sowohl im Gewächshaus als auch unter praktischen Bedingungen im Feld durchgeführt. Hierbei wurden zur Verbesserung der Selektivität an Mais auch Safener eingesetzt, wie sie aus P 4041120.6 (=EP-A-1008297 und EP-A-492367) und P 4041121.4 (=EP-A-492366) bekannt sind, um die Imidazolinone ohne Schädigung der Maiskultur anwenden zu können. Aus P 4141247.8 (=EP-A-547546) ist bekannt, daß die verwendeten Safenerwirkstoffe auch Schäden verhindern, die von Mischungen verschiedener Herbizide verursacht werden, d. h. die angewandten Safenerwirkstoffe schützen den Mais vor Schädigung durch verschiedene Wirkstoffkombinationen, wie sie hier geprüft wurden.

Die biologischen Versuche umfaßten ein weites Spektrum verschiedener Unkräuter und Ungräser, insbesondere solche, die von großer wirtschaftlicher Bedeutung im Maisanbau sind. Die Behandlung der Unkräuter erfolgt dabei überwiegend im Nachlaufverfahren. Die Ergebnisse ware über weite Teile hinweg sehr überraschend. Es wurde nämlich gefunden, daß zahlreiche Kombinationen von Imidazolinonen, wie z. B. Imazethapyr mit verschiedenen Maisherbiziden aus der Gruppe der Cyclohexandione ausgesprochen synergistische Wirksamkeit entfalten, d. h. die in der Praxis gefundene Effektivität ist deutlich höher als die additive Wirkung, die aufgrund der beobachteten Wirkung der Einzelkomponenten bei alleiniger Anwendung zu erwarten ist.

## Patentansprüche

1. Herbizide Mittel, enthaltend in einer synergistisch wirksamen Menge mindestens eine Verbindung aus der Gruppe Imazaquin, Imazethapyr und Imazethamethapyr in Kombination mit mindestens einem Herbizid aus der Gruppe der Cyclohexandione, mit der Maßgabe, daß die Kombination von 5-(1-Methylthiocyclopropan-1-yl)-2-[1-(trans-3-chlorallyloximino)-propionyl]-cyclohexan-1,3-dion und Imazethapyr ausgenommen sein soll.

2. Mittel nach Anspruch 1, worin das Herbizid aus der Gruppe der Cyclohexandione 2-(2-Chlor-4-methylsulfonylbenzoyl)-cyclohexan-1,3-dion (Sulcotrione) ist.

3. Mittel nach Anspruch 1 oder 2, **dadurch gekennzeichnet, daß** sie 0,1 bis 99 Gew.-% Wirkstoffe neben üblichen Formulierungshilfsmitteln enthalten.

4. Mittel nach einem oder mehreren der Ansprüche 1 bis 3, **dadurch gekennzeichnet, daß** sie die Wirkstoffe in einem Gewichtsverhältnis zwischen 1 : 20 und 20 : 1 enthalten.

5. Mittel nach einem oder mehreren der Ansprüche 1 bis 4, **dadurch gekennzeichnet, daß** sie weitere pestizid wirksame Stoffe, Düngemittel und/oder Wachstumsregulatoren enthalten.

6. Verfahren zur Herstellung eines Mittels nach einem oder mehreren der Ansprüche 1 bis 5, **dadurch gekennzeichnet, daß** man die Wirkstoffe in einer üblichen Pflanzenschutzformulierung aus der Gruppe, enthaltend Spritzpulver, emulgierbare Konzentrate, wäßrige Lösungen, Emulsionen, versprühbare Lösungen, Dispersionen auf Öl- oder Wasserbasis, Suspoemulsionen, Suspensionskonzentrate, ölmischbare Lösungen, Kapselsuspensionen, Granulate in Form von Mikro-, Sprüh-, Aufzugs- und Adsorptionsgranulaten, Stäubemittel, Beizmittel, Boden- oder Streugranulate, wasserdispergierbare Granulate, ULV-Formulierungen, Mikrokapseln und Wachse, formuliert.

7. Verfahren zur Bekämpfung von unerwünschten Pflanzen, **dadurch gekennzeichnet, daß** man auf diese oder deren Anbauflächen eine herbizid wirksame Menge eines Mittels nach einem oder mehreren der Ansprüche 1 bis 5 appliziert.

8. Verfahren nach Anspruch 7, **dadurch gekennzeichnet, daß** Unkräuter in Nutzpflanzenkulturen selektiv bekämpft werden.

9. Verfahren nach Anspruch 8, **dadurch gekennzeichnet, daß** die Nutzpflanzenkultur eine aus der Gruppe Weizen, Gerste, Roggen, Reis und Mais ist.

10. Verwendung der herbiziden Mittel nach einem oder mehreren der Ansprüche 1 bis 5 zur selektiven Unkrautbekämpfung in Nutzpflanzenkulturen.

## Claims

1. A herbicidal composition comprising in a synergistic amount at least one compound from the group consisting of imazaquin, imazethapyr and imazethamethapyr in combination with at least one herbicide selected from the cyclohexanedione group, with the proviso that the combination of 5-(1-methylthiocyclopropan-1-yl)-2-[1-(trans-3-chloroallyloximino)propionyl]cyclohexane-1,3-dione and imazethapyr is excluded.

2. A composition as claimed in claim 1, wherein the herbicide from the cyclohexanedione group is 2-(2-chloro-4-methylsulfonylbenzoyl)cyclohexane-1,3-dione (sulcotrione).

3. A composition as claimed in claim 1 or 2, comprising 0.1 to 99% by weight of active compounds in addition to customary formulation auxiliaries.

4. A composition as claimed in one or more of claims 1 to 3, comprising the active compounds in a weight ratio between 1:20 and 20:1.

5. A composition as claimed in one or more of claims 1 to 4, which contains other pesticidal substances, fertilizers and/or growth regulators.

6. A process for the preparation of a composition as claimed in one or more of claims 1 to 5, which comprises formulating the active compounds into a customary plant protection formulation from the group consisting of wettable powders, emulsifiable concentrates, aqueous solutions, emulsions, sprayable solutions, dispersions on an oil or water basis, suspoemulsions, suspension concentrates, oil-miscible solutions, capsule suspensions, granules in the form of microgranules, spray granules, coated granules and adsorption granules, dusts, dressing agents, granules for the soil or for scattering, water-dispersible granules, ULV formulations, microcapsules and waxes.

7. A process for the control of undesired plants, which comprises applying a herbicidally active amount of a composition as claimed in one or more of claims 1 to 5 to them or their cultivation areas.

8. The process as claimed in claim 7, wherein weeds in cultivated crop plants are selectively controlled.

9. The process as claimed in claim 8, wherein the cultivated plant crop is one from the group consisting of wheat, barley, rye, rice and corn.

10. The use of the herbicidal compositions as claimed in one or more of claims 1 to 5 for the selective control of weeds in cultivated plant crops.

## Revendications

1. Agents herbicides, contenant en une quantité synergique active au moins un composé choisi parmi l'imazaquin, l'imazéthapyr et l'imazéthaméthapyr en combinaison avec au moins un herbicide choisi parmi les cyclohexanediones, avec la condition que la combinaison de 5-(1-méthylthiocyclopropane-1-yl)-2-[1-trans-3-chloroallyloximino)-propionyl]-cyclohexane-1,3-dione et de l'imazétapyr soit exclue.

2. Agents selon la revendication 1, dans lesquels l'herbicide du groupe des cyclohexanediones est la 2-(2-chloro-4-méthylsulfonylbenzoyl)-cyclohexane-1,3-dione (Sulcotrione).

3. Agents selon la revendication 1 ou 2, **caractérisés en ce qu'**ils contiennent de 0,1 à 99 % en poids de substances actives en plus d'adjuvants de formulation usuels.

4. Agents selon une ou plusieurs des revendications 1 à 3, **caractérisés en ce qu'**ils contiennent les substances actives dans un rapport en poids compris entre 1 : 20 et 20 : 1.

5. Agents selon une ou plusieurs des revendications 1 à 4, **caractérisés en ce qu'**ils contiennent d'autres substances actives pesticides, substances fertilisantes et/ou régulateurs de croissance.

6. Procédé pour la préparation d'un agent selon une ou plusieurs des revendications 1 à 5, **caractérisé en ce qu'**on formule les substances actives dans une formulation usuelle de protection des plantes dans le groupe, contenant les poudres de pulvérisation, les concentrés émulsionnables, les solutions aqueuses, les émulsions, les solutions pulvérisables, les dispersions à base d'huile ou d'eau, les suspoémulsions, les concentrés en suspension, les solutions miscibles à l'huile, les suspensions en capsule, les granulés sous la forme de microgranulés, de granulés de pulvérisation, d'absorption et d'adsorption, les agents pulvérulents, les agents désinfectants, les granulés de sol ou de saupoudrage, les granulés dispersibles à l'eau, les formulations ULV, les microcapsules et les cires.

7. Procédé de lutte contre les plantes non souhaitées, **caractérisé en ce qu'**on applique sur celles-ci ou sur leurs surfaces de culture une quantité herbicide efficace d'un agent selon une ou plusieurs des revendications 1 à 5.

8. Procédé selon la revendication 7, **caractérisé en ce que** les mauvaises herbes sont combattues sélectivement dans des cultures de plantes utiles.

9. Procédé selon la revendication 8, **caractérisé en ce que** la culture de plantes utiles est choisie parmi le blé, l'orge, le seigle, le riz et le maïs.

10. Utilisation des agents herbicides selon une ou plusieurs des revendications 1 à 5 pour la lutte sélective contre les mauvaises herbes dans des cultures de plantes utiles.
